# EUROPÄISCHE PATENTSCHRIFT

(11) **EP 2 172 682 B1**
(45) Veröffentlichungstag und Bekanntmachung des Hinweises auf die Patenterteilung: **09.02.2011**
(21) Anmeldenummer: 08165906.2
(22) Anmeldetag: 06.10.2008
(51) Int. Cl.: F16K 31/04, F16K 31/524, F16K 31/528, F02M 25/07

(54) **Abgasrückführventil**
Exhaust gas recirculation valve
Soupape de recyclage de gaz d'échappement

(43) Veröffentlichungstag der Anmeldung: 07.04.2010
(73) Patentinhaber: Cooper-Standard Automotive (Deutschland) GmbH, 89601 Schelklingen (DE)
(72) Erfinder: Klipfel, Bernhard, 76187 Karlsruhe (DE); Thiery, Christoph, 68239 Mannheim (DE)
(74) Vertreter: HOFFMANN EITLE

(56) Entgegenhaltungen:
- EP-A- 0 856 657
- EP-A- 0 887 540
- EP-A- 1 526 271
- EP-A- 1 882 843
- WO-A-2005/021954

## Beschreibung

### Technisches Gebiet

Die Erfindung betrifft ein Abgasrückführventil.

Auf dem Gebiet der Verbrennungsmotoren ist es bekannt in Abhängigkeit von Betriebszustand Abgas auf die Frischluftseite zurückzuführen, um den Kraftstoffverbrauch und die Schadstoffemissionen zu senken.

### Stand der Technik

Aus der EP 1 111 227 A2 ist ein Abgasrückführventil bekannt, bei dem die Drehbewegung eines Antriebs in eine translatorische Bewegung des Ventilelements umgewandelt wird. Zumindest zu Beginn des Öffnungsvorganges wird dem Ventilelement eine Drehbewegung erteilt.

Die EP 1 526 271 A1 betrifft ein Abgasrückführventil, bei dem die Drehbewegung eines Antriebs in eine Hubbewegung des Ventilelements umgewandelt wird, wobei sich das Ventilelement beim Öffnen mit dem Antriebselement drehen kann, jedoch nicht zwangsweise mit diesem mitgedreht wird. Die Umwandlung der Dreh- in eine Hubbewegung, erfolgt im Wesentlichen durch eine angetriebene "Schnecke" mit einem Gewindegang, die mit einem ortsfesten, jedoch drehbaren Rad in Eingriff steht.

### Darstellung der Erfindung

Der Erfindung liegt die Aufgabe zugrunde, ein Abgasrückführventil zu schaffen, das insbesondere im Hinblick auf die Zuverlässigkeit während des Betriebs verbessert ist. Die Lösung dieser Aufgabe erfolgt durch das in Anspruch 1 beschriebene Abgasrückführventil.

Demzufolge weist dieses einen Antrieb, zumindest ein drehbares Antriebselement und zumindest ein translatorisch angetriebenes Abtriebselement auf. Hierbei ist eine Rotationsachse des Antriebselements bezüglich einer Translationsachse des Abtriebselements geneigt. Der Antrieb des Abgasrückführventils ist bevorzugt, jedoch nicht hierauf beschränkt, als Drehantrieb ausgeführt. Bei dem drehbaren Antriebselement handelt es sich um ein Gewindeelement, beispielsweise um eine Schnecke mit einem Gewindegang oder einem Teil eines Gewindeganges. Die Schnecke könnte in englischer Sprache als "worm" bezeichnet werden. Mit der Schnecke steht das translatorisch angetriebene Abtriebselement derart in Eingriff, dass eine Drehung der Schnecke zu einer translatorischen Bewegung des Abtriebselements führt. Das Abtriebselement kann beispielsweise ein von dem Ventilstößel vorstehender Abschnitt, ein(e) daran vorstehende(s) und mit der Schnecke in Eingriff stehende(s) Rad oder Rolle, oder ein Element mit einem Gegengewinde sein.

Erfindungsgemäß ist die Rotationsachse des Antriebselements bezüglich der Translationsachse des Abtriebselements geneigt. Im geometrischen Sinne sind die beiden Achsen windschief zueinander. Dies führt im Wesentlichen dazu, dass die Kraftübertragung zwischen Antriebs- und Abtriebselement in einer Richtung erfolgt, die nicht oder zumindest nicht so umfangreich wie bisher bezüglich der Kontaktfläche des Antriebselements geneigt ist. Herkömmlich, wenn die Rotationsachse des Antriebselements und die Translationsachse des Abtriebselements zueinander parallel sind, erfolgt die Kraftübertragung von der Schnecke auf das Abtriebselement über eine Fläche, die bezüglich der Translationsachse des Abtriebselements geneigt ist. Dies hat zur Folge, dass eine seitens des Abtriebselements aufgebrachte, geradlinige Kraft, beispielsweise infolge des Gasdrucks, zu einer Verdrehung des Antriebselements führen kann, was eine unbeabsichtigte Verstellung des Ventilelements zur Folge hat. Bei dem erfindungsgemäßen Abgasrückführventil ist eine derartige Neigung zwischen der Translationsachse des Abtriebselements und der Rotationsachse des Antriebselements reduziert, so dass höhere Kräfte für das Verdrehen des Antriebselements erforderlich sind. Hierdurch kann in der Praxis weitgehend ausgeschlossen werden, dass sich das Ventil durch Gaskräfte unbeabsichtigt verstellt.

Das Antriebselement weist eine Oberfläche auf, mit der zumindest ein Abschnitt, beispielsweise der erwähnte Vorsprung oder das beschriebene Rädchen, des Abtriebselements in Berührung steht, und welche Oberfläche weitgehend senkrecht zur Translationsachse des Abtriebselements ist. Durch diese Anordnung wirkt eine jegliche, von dem Abtriebselement aufgebrachte Kraft, in einer Richtung weitgehend senkrecht zur Oberfläche an dem Antriebselement, und kann dementsprechend keine unbeabsichtigte Verdrehung desselben bewirken.

Bevorzugte Weiterbildungen sind in den weiteren Ansprüchen beschrieben.

Es wird derzeit ferner bevorzugt, dass eine Stelle, an der ein Abschnitt des Abtriebselements mit dem Antriebselement in Berührung steht, zumindest weitgehend mit einer Achse eines translatorisch bewegten Ventilelements fluchtet. Hierdurch werden auf die Anordnung bestehend aus translatorisch bewegtem Ventilelement und damit wirkverbundenem Abtriebselement keine Quer- oder Seitenkräfte aufgebracht. Dies bietet für den dauerhaften Betrieb des Ventils Vorteile. Die beschriebene Orientierung einer Kontaktstelle an dem Antriebselement zu der Translationsachse des Ventilelements kann jedoch mit dem oben beschriebenen Merkmal ebenso wie mit sämtlichen nachfolgend angegebenen Merkmalen in vorteilhafter Weise kombiniert werden.

Für das erfindungsgemäße Abgasrückführventil hat es sich ferner als günstig erwiesen, wenn das Ventilelement lediglich translatorisch bewegbar, jedoch nicht verdrehbar ist. Hierdurch können Verzögerungen und Behinderungen der Öffnungsbewegung beim Ansprechverhalten in vorteilhafter Weise reduziert werden.

Im Hinblick auf die Öffnungsrichtung des Ventilelements wird derzeit ferner bevorzugt, dass sie gegen Abgasdruck verläuft. Hierdurch kann der Abgasgegendruck in vorteilhafter Weise dafür genutzt werden, das Schließen des Ventils zu unterstützen, und damit die Leckmenge im geschlossenen Zustand zu minimieren.

Bevorzugt ist zwischen dem Antrieb und dem Antriebselement ein Getriebe vorgesehen, das einstufig ausgeführt ist. Durch eine derartige einstufige Übersetzung verbessert sich das Ansprechverhalten des Ventils, insbesondere infolge der verringerten Reibung und einer geringeren Massenträgheit. Alternativ kann das Getriebe auch zwei- oder mehrstufig sein, was die Erzeugung höherer Kräfte ermöglicht.

Bevorzugt ist das Antriebselement ferner zumindest mittelbar mit einem Federelement, beispielsweise einer Spiralfeder, verbunden, das lediglich verdreht wird. Ein derartiges Federelement stellt in vorteilhafter Weise im Sinne eines "failsafe" auch bei einer Störung oder Unterbrechung im elektrischen System sicher, dass das Ventil schließt.

Für ein Ventilgehäuse, in dem das Ventilelement angeordnet ist, hat es sich ferner als günstig erwiesen, dieses einstückig, beispielsweise als Gussgehäuse, auszuführen. Hierdurch kann die Anzahl der verwendeten Teile in vorteilhafter Weise verringert werden.

Schließlich wird derzeit bevorzugt, das Ventilgehäuse mit zumindest einem Kühlkanal zu versehen. Hierdurch kann das Ventilgehäuse insbesondere in der Umgebung eines Ventilstößels gekühlt werden, so dass die Dauerhaftigkeit des Ventilstößels und der Stößelabdichtung und -führung und damit des Abgasrückführventils insgesamt verbessert werden kann.

### Kurze Beschreibung der Zeichnungen

Nachfolgend wird die Erfindung anhand einer beispielhaft in den Zeichnungen dargestellten Ausführungsform näher erläutert. Es zeigen:
- Fig. 1: eine Seitenansicht des erfindungsgemäßen Abgasrückführventils; und
- Fig. 2: eine teilweise geschnittene Ansicht des erfindungsgemäßen Abgasrückführventils.

### Ausführliche Beschreibung einer bevorzugten Ausführungsform der Erfindung

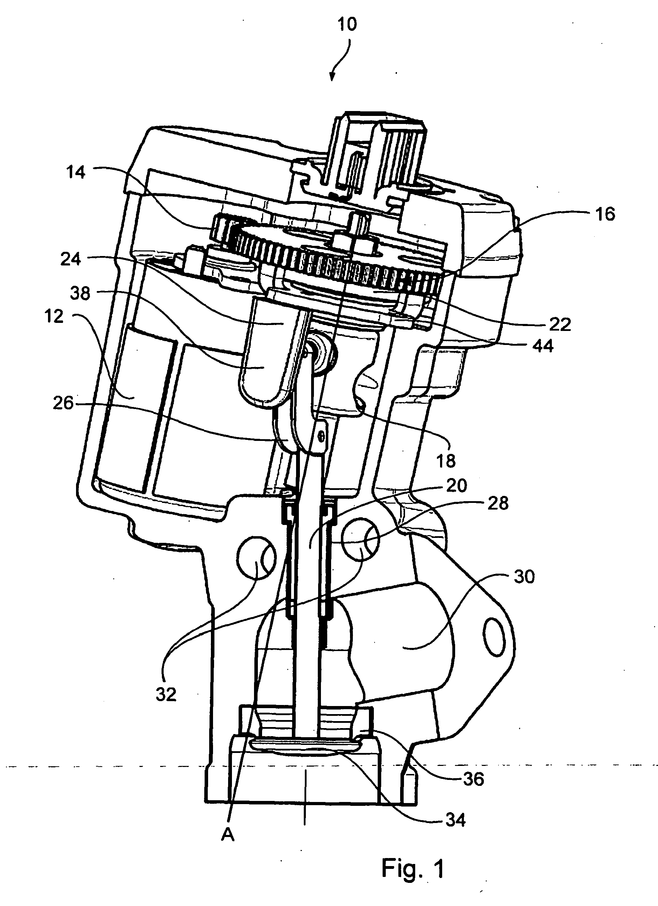

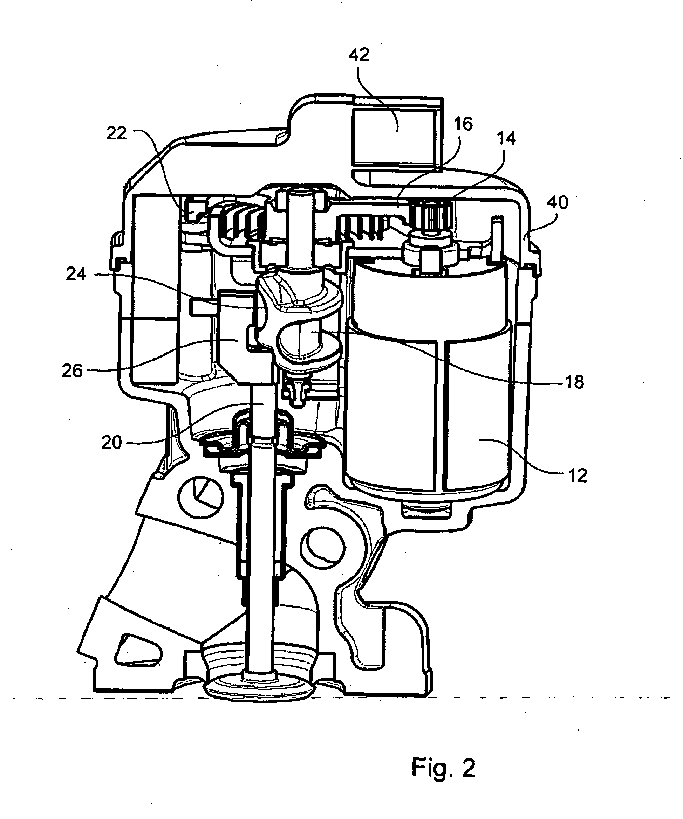

Wie in Fig. 1 zu erkennen ist, weist das erfindungsgemäße Abgasrückführventil einen Antrieb 12 in Form eines geeigneten Motors auf. An der Motorwelle ist bei der gezeigten Ausführungsform ein Ritzel 14 angebracht, das ein Zahnrad 16 antreibt. Mit dem Zahnrad 16 ist das Antriebselement 18 in Form einer Schnecke angebracht, das, wie nachfolgend genauer beschrieben, den Ventilstößel 20 antreibt. Bei der gezeigten Ausführungsform weist die Schnecke, wie genauer in Fig. 2 zu erkennen ist, eine Achse auf, die sowohl an ihrem oberen als auch an ihrem unteren Ende gelagert ist. Die Anordnung bestehend aus Zahnrad 16 und Schnecke 18 ist bei der gezeigten Ausführungsform mit einer Spiralfeder 22 verbunden, die beim Öffnen und Schließen des Ventils lediglich verdreht wird. Die Kombination aus Ritzel 14 und Zahnrad 16 stellt bei der gezeigten Ausführungsform ein einstufiges Getriebe dar, das die oben beschriebenen Vorteile aufweist.

Die Umwandlung der Drehbewegung der Schnecke 18 in eine translatorische Bewegung des Ventilstößels 20 geschieht mittels eines Abtriebselements 24, das bei der gezeigten Ausführungsform als Rädchen ausgeführt ist und mit dem Gewindegang der Schnecke 18 in Eingriff steht. Das Rädchen 24 ist drehbar an einem Bügel 26 angebracht, der an dem Ventilstößel 20 befestigt ist. Der Ventilstößel 20 ist in einer geeigneten Buchse 28 gelagert, die bei der gezeigten Ausführungsform in einem Ventilgehäuse 30 vorgesehen ist, das als einstückiges Gussteil ausgeführt ist. Wie ergänzend aus Fig. 2. hervorgeht, kann das Ventilgehäuse 30 so ausgeführt sein, dass es zusätzlich den Antrieb 12 und die Anordnung bestehend aus Antriebs- 18 und Abtriebselement 24 aufnimmt. Lediglich das Getriebe in Form des Ritzels 14, des Zahnrads 16 und der Spiralfeder 22 befinden sich im Bereich eines Deckels 40. Dieser kann ferner eine Steckbuchse 42 für die elektrischen Anschlüsse aufweisen. Mittels dieser Steckbuchse kann beispielsweise ein Anschluss an eine Steuerung, die mit einem Motorsteuergerät verbunden sein kann, erfolgen, um den Betrieb des Ventils elektronisch zu steuern. Anhand der Kühlmittelanschlüsse 32 ist zu erkennen, dass das Ventilgehäuse 30 in vorteilhafter Weise gekühlt werden kann, um auch den Ventilstößel 20 und dessen Lagerung und Dichtung zu kühlen.

An dem Ventilstößel 20 ist ein Ventilteller 34 angebracht, der mit einem Ventilsitz 36 in Eingriff steht, der in vorteilhafter Weise vergleichsweise scharfkantig ausgeführt ist. In vorteilhafter Weise befindet sich das Ventilelement in Form des Ventiltellers 34 stets, d.h. im geöffneten ebenso wie im geschlossenen Zustand, innerhalb des Ventilgehäuses 30. Bei der gezeigten Ausführungsform erfolgt die Öffnung des Ventiltellers 36 gegen den Abgasdruck, gemäß der Ausrichtung von Fig. 1 nach unten, so dass dieser das Schließen des Ventils unterstützt. Gleichzeitig besteht aus folgenden Gründen nicht die Gefahr, dass der Abgasdruck das Ventil unbeabsichtigt verstellt.

Wie anhand von Fig. 1 zu erkennen ist, ist die Rotationsachse A der Schnecke 18, die als Antriebselement fungiert, bezüglich der Translationsachse des Abtriebselements, mit anderen Worten bezüglich der Achse des Ventilstößels 20, geneigt. Hierdurch kann bei der gezeigten Ausführungsform diejenige Oberfläche im Bereich des Gewindeganges der Schnecke 18, die mit dem Rädchen 24 in Eingriff steht, weitgehend senkrecht zu der Achse des Ventilstößels 20 angeordnet sein. Wenn somit auf den Ventilstößel 20, beispielsweise infolge des Abgasdruck, eine Kraft wirkt, wirkt diese weitgehend senkrecht auf die Fläche im Bereich des Gewindeganges der Schnecke 18, und kann diese dementsprechend nicht verdrehen. Hierdurch kann in vorteilhafter Weise eine unbeabsichtigte Verstellung des Ventils vermieden werden, was insbesondere bei kleinen Öffnungen relevant ist.

Die in den Figuren dargestellte bevorzugte Ausführungsform bietet einen weiteren Vorteil, der anhand Fig. 2 erläutert wird. In Fig. 2 ist zunächst das Zahnrad 16 und die Spiralfeder 22 zur Verdeutlichung geschnitten dargestellt. In Fig. 2 ist ferner zu erkennen, dass die Schnecke 18 nahezu einen vollständigen Gewindegang aufweist. Ferner ergibt sich aus der Darstellung von Fig. 2 der weitere Vorteil, dass diejenige Stelle, an der das Rädchen 24 mit dem Gewindegang der Schnecke 18 in Eingriff steht, weitgehend mit der Achse des Ventilstößels 20 fluchtet. Hierdurch werden keine Quer- oder Seitenkräfte erzeugt, was für die Dauerhaftigkeit des Ventils Vorteile bietet. Diese Anordnung wird, wie erwähnt, durch den weitgehend U-förmigen Bügel erreicht, der am oberen Ende des Ventilstößels 20 angebracht ist und an seinem anderen Ende das Rädchen 24 drehbar lagert.

Wie in Fig. 1 ergänzend zu erkennen ist, kann eine ortsfeste Führung 38 vorgesehen sein, die einen (in Fig. 1 nicht erkennbaren) Vorsprung aufweist, der sich beispielsweise in einen Schlitz des Bügels 26 erstreckt, so dass der Bügel 26, der sich beim Betätigen des Ventils zusammen mit dem Ventilstößel 20 translatorisch bewegt, in der Bewegungsrichtung geführt ist. Fig. 1 zeigt auch, dass die Führung 38 an einer Platte 44 angebracht sein kann, an der ergänzend der Antrieb 12 angebracht und/oder die Achse der Schnecke 18 gelagert sein kann.

## Patentansprüche

1. Abgasrückführventil (10) mit einem Antrieb (12), zumindest einem drehbaren Antriebselement (18) und zumindest einem translatorisch antreibbaren Abtriebselement (24), wobei das Antriebselement (18) ein Gewindeelement umfasst, **dadurch gekennzeichnet, dass** eine Rotationsachse (A) des Antriebselements (18) bezüglich einer Translationsachse des Abtriebselements (24) geneigt ist, und
dass das Antriebselement (18) eine Oberfläche aufweist, mit der zumindest ein Abschnitt des Abtriebselements (24) in Berührung steht, und die weitgehend senkrecht zur Translationsachse des Abtriebselements (24) ist.

2. Abgasrückführventil nach Anspruch 1, **dadurch gekennzeichnet, dass** eine Stelle, an der zumindest ein Abschnitt des Abtriebselements (24) mit dem Antriebselement (18) in Berührung steht, zumindest weitgehend mit einer Translationsachse eines translatorisch bewegten Ventilelements (36) fluchtet.

3. Abgasrückführventil nach Anspruch 1 oder 2, **dadurch gekennzeichnet dass** ein Ventilelement (36) lediglich translatorisch bewegt, und nicht verdreht wird.

4. Abgasrückführventil nach einem der vorangehenden Ansprüche, **dadurch gekennzeichnet, dass** eine Öffnungsrichtung eines Ventilelements (36) gegen den Abgasdruck verläuft.

5. Abgasrückführventil nach einem der vorangehenden Ansprüche, **dadurch gekennzeichnet, dass** dieses eine einstufige Übersetzung (14, 16) aufweist.

6. Abgasrückführventil nach einem der vorangehenden Ansprüche, **dadurch gekennzeichnet, dass** das Antriebselement (18) mit einem Federelement (22) verbunden ist, das beim Betätigen des Ventils lediglich verdreht wird.

7. Abgasrückführventil nach einem der vorangehenden Ansprüche, **dadurch gekennzeichnet, dass** dieses ein integrales Ventilgehäuse (30) aufweist.

8. Abgasrückführventil nach einem der vorangehenden Ansprüche, **dadurch gekennzeichnet, dass** dieses ein Ventilgehäuse (30) mit zumindest einem Kühlkanal aufweist.

## Claims

1. Exhaust gas recirculation valve (10) comprising a drive (12), at least one rotatable drive element (18) and at least one translationally drivable driven element (24), wherein the drive element (18) comprises a thread element, **characterized in that** a rotational axis (A) of the drive element (18) is inclined with respect to a translational axis of the driven element (24), and
that the drive element (18) has a surface with which at least a portion of the driven element (24) is in contact and which is largely perpendicular to the translational axis of the driven element (24).

2. Exhaust gas recirculation valve according to claim 1, **characterized in that** a location at which at least a portion of the driven element (24) is in contact with the drive element (18), is at least largely aligned with a translational axis of a translationally moved valve element (36).

3. Exhaust gas recirculation valve according to claims 1 or 2, **characterized in that** a valve element (36) is moved only translationally and is not twisted.

4. Exhaust gas recirculation valve according to any of the preceding claims, **characterized in that** an opening direction of a valve element (36) runs against the exhaust gas pressure.

5. Exhaust gas recirculation valve according to any of the preceding claims, **characterized in that** it comprises a single-stage transmission (14, 16).

6. Exhaust gas recirculation valve according to any of the preceding claims, **characterized in that** the drive element (18) is connected to a spring element (22) which is solely twisted upon actuating the valve.

7. Exhaust gas recirculation valve according to any of the preceding claims, **characterized in that** it comprises an integral valve housing (30).

8. Exhaust gas recirculation valve according to any of the preceding claims, **characterized in that** it comprises a valve housing (30) having at least one cooling channel.

## Revendications

1. Soupape de recirculation des gaz d'échappement (10), avec un entraînement (12), au moins un élément menant (18) susceptible de tourner et au moins un élément mené (24) susceptible d'être entraîné en translation, l'élément menant (18) comprenant un élément fileté, **caractérisée en ce qu'**un axe de rotation (A) de l'élément menant (18) est incliné par rapport à un axe de translation de l'élément mené (24), et
**en ce que** l'élément menant (18) présente une surface, avec laquelle au moins un tronçon de l'élément mené (24) est en contact et qui est située notablement perpendiculairement à l'axe de translation de l'élément mené (24).

2. Soupape de recirculation des gaz d'échappement selon la revendication 1, **caractérisée en ce qu'**un emplacement, auquel au moins un tronçon de l'élément mené (24) est en contact avec l'élément menant (18), est au moins notablement aligné avec un axe de translation d'un élément de soupape (36) déplacé en translation.

3. Soupape de recirculation des gaz d'échappement selon la revendication 1 ou 2, **caractérisée en ce qu'**un élément de soupape (36) est déplacé uniquement en translation, et non pas en rotation.

4. Soupape de recirculation des gaz d'échappement selon l'une des revendications précédentes, **caractérisée en ce qu'**un sens d'ouverture d'un élément de soupape (36) s'étend à l'encontre de la pression des gaz d'échappement.

5. Soupape de recirculation des gaz d'échappement selon l'une des revendications précédentes, **caractérisée en ce que** celle-ci présente une transmission (14, 16) à un étage.

6. Soupape de recirculation des gaz d'échappement selon l'une des revendications précédentes, **caractérisée en ce que** l'élément menant (18) est relié à un élément élastique (22), soumis uniquement à une rotation lors de l'actionnement de la soupape.

7. Soupape de recirculation des gaz d'échappement selon l'une des revendications précédentes, **caractérisée en ce que** celle-ci présente un boîtier de soupape (30) monobloc.

8. Soupape de recirculation des gaz d'échappement selon l'une des revendications précédentes, **caractérisée en ce que** celle-ci présente un boîtier de soupape (30) comprenant au moins un canal de refroidissement.
